# EUROPÄISCHE PATENTSCHRIFT

(11) **EP 2 701 938 B1**
(45) Veröffentlichungstag und Bekanntmachung des Hinweises auf die Patenterteilung: **06.11.2019**
(21) Anmeldenummer: 12713058.1
(22) Anmeldetag: 28.03.2012
(51) Int. Cl.: B60K 37/06, G06F 3/048

(54) **SCHNITTSTELLE ZUR DRAHTLOSEDATENÜBERTRAGUNG IN EINEM KRAFTFAHRZEUG UND COMPUTERPROGRAMMPRODUKT**
INTERFACE FOR WIRELESS DATA TRANSMISSION IN A MOTOR VEHICLE, AND COMPUTER PROGRAM PRODUCT
INTERFACE POUR LE TRANSFERT DE DONNÉES SANS FIL DANS UN VÉHICULE AUTOMOBILE ET PRODUIT LOGICIEL INFORMATIQUE

(30) Priorität: 26.04.2011 DE 102011018555
(43) Veröffentlichungstag der Anmeldung: 05.03.2014
(73) Patentinhaber: Continental Automotive GmbH, 30165 Hannover (DE)
(72) Erfinder: BAROWSKI, Peter, 63110 Rodgau (DE); CIELER, Stephan, 60316 Frankfurt (DE); LEIMBACH, Jürgen, 63741 Aschaffenburg (DE); LÜBBERT, Katrin, 64665 Alsbach-Hähnlein (DE); MEIER-ARENDT, Guido, 63225 Langen (DE); NIEMEYER, Alexander, 64832 Babenhausen (DE); SOLTERBECK, Carmen, 60596 Frankfurt (DE)
(86) Internationale Anmeldenummer: PCT/EP2012/055487
(87) Internationale Veröffentlichungsnummer: WO 2012/146455

(56) Entgegenhaltungen:
- WO-A1-2006/125515
- WO-A1-2010/114373
- WO-A2-01/94156
- US-A1- 2009 248 820

## Beschreibung

Die Erfindung betrifft eine Schnittstelle zur Datenübertragung in einem Kraftfahrzeug zwischen einem mobilen Datengerät mit einer Recheneinheit, insbesondere einem Taschencomputer, Mobiltelefon, Smartphone oder dergleichen, und einem Informationsdisplay in dem Kraftfahrzeug, insbesondere dem Display einer Mensch-Maschine-Schnittstelle (HMI) einer Fahrzeugkommunikationseinheit, einem beispielsweise auf die Frontscheibe des Fahrzeugs projizierten Head-Up-Displays, einem in Fahrzeugfront beispielsweise an den Rückenlehnen der Vordersitze angeordneten Unterhaltungsdisplays oder sonstigen in dem Fahrzeug angeordneten Displays. Eine erfindungsgemäß besonders bevorzugte Anwendungsform sieht die Darstellung auf dem zentralen Informationsdisplays des Fahrzeugs vor. Ferner wird ein zur Einrichtung der Schnittstelle vorgesehenes Computerprogrammprodukt beschrieben.

Zur Datenübertragung sind das mobile Datengerät und das Informationsdisplay über eine Drahtloskommunikation, beispielsweise Bluetooth oder WLAN oder dergleichen, miteinander verbindbar, so dass der Bildschirminhalt des mobilen Datengeräts auf dem Informationsdisplay darstellbar ist.

Grundsätzlich ist bereits bekannt, den Inhalt eines Mobiltelefons auf dem Display einer anderen Recheneinheit, beispielsweise auch in einem Kraftfahrzeug, darzustellen, wobei hierfür regelmäßig gesonderte Benutzereingaben an dem mobilen Datengerät und/oder in der Recheneinheit notwendig sind, an welche das Display angeschlossen ist, auf dem die Daten des mobilen Datengeräts dargestellt werden sollen. Dies ist aufwendig und führt dazu, dass diese Funktion durch die Benutzer relativ selten tatsächlich genutzt wird. Insbesondere im Kraftfahrzeug ist dies von Nachteil, weil dort die für derartige Eingaben zur Verfügung stehende Zeit begrenzt ist. Aus Sicherheitsgründen ist häufig vorgesehen, dass derartige Eingaben nur während des Stillstands des Fahrzeugs erfolgen können. Hierfür werden für den Fahrer des Fahrzeugs beispielsweise Rotphasen einer Ampel genutzt. Allerdings muss sich der Benutzer eines Mobiltelefons oder sonstigen mobilen Datengeräts meist durch eine aufwändige Menüstruktur durcharbeiten, um die entsprechenden Befehle zur Darstellung des Bildschirminhaltes des mobilen Datengeräts auf einem an eine externe Recheneinheit angeschlossenen Display einzuleiten.

Aus der EP 2 045 999 A1 ist es bekannt, ein Mobiltelefon mit einem Beschleunigungssensor auszustatten und zu übertragende Daten auf einem Display anzuzeigen und auszuwählen. Die Datenübertragung selbst über eine Infrarotdatenverbindung wird gemäß der Lehre der EP 2 045 999 A1 dann initiiert, wenn das Mobiltelefon in einem bestimmten Winkel gehalten wird, welcher durch den Beschleunigungssensor detektiert ist. Hierbei erfolgt jedoch keine Übertragung der graphischen Bildschirmdarstellung. Vielmehr wird lediglich ein Übertragungsvorgang zuvor ausgewählter Daten eingeleitet.

Aus der US 2009/0309846 A1 ist ein Kommunikationssystem bekannt, bei dem auf einem interaktiven Display dargestellte Informationen über ein Kommunikationsnetzwerk an ein anderes interaktives Display übertragen werden können. Hierfür kann ein Bewegungssensor vorgesehen werden, der die Handbewegung eines Nutzers erfasst, um beispielsweise den auf einem Bildschirm dargestellten Bildschirminhalt in Richtung eines anderen Bildschirms zu übertragen. Hierdurch ist es auf einfache Weise für viele Personen an unterschiedlichen interaktiven Bildschirmen möglich, zusammen zu arbeiten und auf dem interaktiven Display dargestellte Inhalte zu verteilen. Die Verteilung wird durch einen zentralen Server geleistet, an den die verschiedenen Bildschirme angeschlossen sind. Dies ist umständlich, da der Server zuvor konfiguriert und die verwendeten Bildschirme bei dem Server angemeldet werden müssen.

Eine derartige Verwaltung eignet sich nicht für eine spontane Übertragung des Bildschirminhaltes von einem auf ein anderes Display, ohne dass der zentrale Server des Systems zuvor eingerichtet werden muss.

Aus der US 2009/0027332 A1 ein Verfahren zur Steuerung der Bildschirminhalte eines Fahrzeugdisplays bekannt, welche durch den Benutzer mittels Gesten erfolgt, wobei diese Gesten mit einem Bildaufnahmesystem aufgenommen und ausgewertet werden. Eine derartige Bildschirmsteuerung in Kraftfahrzeugen ist technisch aufwändig, da entsprechende Kameras in dem Cockpit eines Fahrzeugs installiert und mittels Bildverarbeitung ausgewertet werden müssen. Dies erfordert einige Zeit, so dass eine bildauswertungsgesteuerte Gestensteuerung in der Regel träge ist. Außerdem besteht das Problem der Unterscheidung von zur Steuerung des Displays gedachten Gesten und normalen Gesten, beispielsweise während einer Unterhaltung mit einer anderen Person in dem Fahrzeug.

Aus der WO 2006/125515 A1 ist der Oberbegriff der Ansprüche 1 und 10 bekannt.

Vor dem Hintergrund dieses Stands der Technik liegt die Aufgabe der vorliegenden Erfindung darin, dem Nutzer eine Möglichkeit zu bieten, Bildschirminhalte von einem mobilen Datengerät auf einfache Weise in einem Informationsdisplay des Fahrzeugs darstellen zu können, wobei vorzugsweise eine Auswahl verschiedener Displays erfolgen können soll.

Diese Aufgabe wird mit den Merkmalen des Anspruchs 1 durch eine Schnittstelle der eingangs genannten Art gelöst, wobei die Recheneinheit eines oder mehrerer Informationsdisplays und/oder die Recheneinheit einer Kommunikationseinheit des Kraftfahrzeugs dazu eingerichtet ist, bei Anmeldung eines mobilen Datengeräts an das drahtlose Kommunikationssystem des Kraftfahrzeugs über die Drahtloskommunikation ein selbstausführendes Applikationsprogramm an die Recheneinheit des mobilen Datengeräts zu übertragen, welches zur Einrichtung der Recheneinheit des mobilen Datengeräts programmiert ist.

Anstelle einer Übertragung von Daten, die anschließend von einer an das Informationsdisplay angeschlossenen Recheneinheit ausgewertet und in Videosignale zur Ansteuerung des Informationsdisplays umgesetzt werden müssen, findet erfindungsgemäß mittels der Drahtloskommunikation eine direkte Kommunikation zwischen dem mobilen Datengerät als Master und dem Informationsdisplay als Slave statt, wobei über diese direkte Master-Slave-Kommunikation unmittelbar die darzustellenden Videosignale übertragen werden. Diese Master-Slave-Verbindung kann auf einfache Weise Ad-hoc aufgebaut werden und sorgt für eine unmittelbare Darstellung von Bildschirminhalten des mobilen Datengerätes auf dem Informationsdisplay des Fahrzeugs.

Die Recheneinheit des Informationsdisplays ist erfindungsgemäß zum Empfangen der Videosignale von der Recheneinheit des mobilen Datengerätes und zur Darstellung der Videosignale auf dem Informationsdisplay eingerichtet. Die Recheneinheit übernimmt also lediglich die Funktion eines Graphiktreibers zur unmittelbaren Ansteuerung des Bildschirms, ohne dass das Videosignal selbst durch die Recheneinheit erzeugt werden müsste. Erfindungswesentlich ist also, dass der Bildschirminhalt von dem mobilen Datengerät an das Informationsdisplay des Fahrzeugs übertragen wird und nicht Daten, aus denen der Bildschirminhalt erst durch eine gesonderte Recheneinheit ermittelt werden muss. Dies ist in der vorliegenden Anmeldung unter dem Begriff "Videosignal" zu verstehen. Es erfolgt erfindungsgemäß keine Übertragung an einen Zentralrechner des Fahrzeugs, der die Daten aufarbeitet und dann ein gewünschtes Display auswählt und ansteuert. Vielmehr wird erfindungsgemäß ein verteiltes System geschaffen, in dem die Recheneinheit des mobilen Datengeräts in einem Master-Slave-Betrieb direkt ein oder mehrere Informationsdisplays des Fahrzeugs ansteuert.

Dabei kann durch die Recheneinheit des Informationsdisplays erfindungsgemäß eine Anpassung der Displayauflösung von dem mobilen Datengerät an das Informationsdisplay erfolgen. Hierzu kann bei dem Aufbau der Drahtloskommunikation und/oder bei einer Initialisierung von mobilem Datengerät und Informationsdisplay die Auflösung einer Darstellung des mobilen Datengerätes an die Recheneinheit des Informationsdisplays übertragen werden, welche dann eine Anpassung der Auflösung vornimmt.

Die Übertragung der Daten kann durch im Rahmen der Kommunikationseinheit vorgesehene Standard-Drahtloskommunikation erfolgen, wobei bevorzugt Bluetooth oder WLAN eingesetzt wird.

Um eine intuitive Bedienung der Schnittstelle zu ermöglichen, kann die Recheneinheit des mobilen Datengeräts erfindungsgemäß dazu eingerichtet sein, die Drahtloskommunikation zur Übertragung der Videosignale mittels einer Berührungsschnittstelle des mobilen Datengeräts einzuleiten. Grundsätzlich könnte die Übertragung der Videosignale auch bei Einbringen und/oder Anmelden des mobilen Datengeräts in das Kraftfahrzeug automatisch initiiert werden und beispielsweise durch eine Berührungsschnittstelle des mobilen Datengeräts unterbrochen werden.

Gemäß einer Variante der vorliegenden Erfindung kann die Darstellung der Videosignale bei Einleitung der Drahtloskommunikation zur Übertragung der Videosignale auf einem vorausgewählten Informationsdisplays des Fahrzeugs erfolgen. Dies vereinfacht die Ausgestaltung der Berührungsschnittstelle, weil bei Initiierung der Berührungsschnittstelle lediglich entschieden werden muss, ob die Drahtloskommunikation zur Übertragung der Videosignale eingeleitet werden soll oder nicht. Das ausgewählte Informationsdisplay des Fahrzeugs steht von vorneherein fest. Dieses kann insbesondere ein zentrales Informationsdisplay sein, beispielsweise in der Mittelkonsole des Fahrzeugs, auf das sowohl der Fahrer als auch der Beifahrer einfachen Zugriff haben. Auch Frontpassagiere des Fahrzeugs können dieses Display in der Regel einsehen.

Eine Alternative der vorliegenden Erfindung liegt darin, dass die Recheneinheit des mobilen Datengeräts dazu eingerichtet ist, die Drahtloskommunikation bei einer gerichteten Bewegung auf einem Touch-Display des mobilen Datengeräts in Richtung des Informationsdisplays des Fahrzeugs einzuleiten, wobei vorzugsweise eine Bewegung aus der Mitte des Touch-Displays bis hin zum Rand des Touch-Displays in Richtung des auszuwählenden Informationsdisplays durchzuführen ist, damit die Recheneinheit des mobilen Datengeräts dies als Befehl zur Einleitung der Drahtloskommunikation versteht. Eine derartige Abgrenzung ist notwendig, um den Befehl zur Einleitung der Drahtloskommunikation der Videosignale von der normalen Bedienung des Touch-Displays des mobilen Gerätes zu unterscheiden.

Alternativ oder zusätzlich kann die Recheneinheit des mobilen Datengeräts dazu eingerichtet sein, die Drahtloskommunikation bei einer gerichteten Bewegung des gesamten mobilen Datengeräts, welche über in dem mobilen Datengerät angeordnete Beschleunigungssensoren feststellbar ist, in Richtung des Informationsdisplays des Fahrzeugs einzuleiten. Diese Gestensteuerung ist besonders intuitiv, weil das mobile Datengerät einfach in Richtung des Informationsdisplays des Fahrzeugs bewegt werden muss, wobei die Bewegung vorzugsweise als ein abruptes Verschieben des Gerätes detektiert werden muss. Dieses abrupte Verschieben zeichnet sich durch eine schnelle Anfangsbeschleunigung und eine dann im Wesentlichen gleichförmige Bewegung mit einem abrupten Stoppen aus. Ein derartiger Bewegungsablauf lässt sich durch Beschleunigungssensoren einfach erfassen, die neben dem reinen Bewegungsablauf häufig auch noch eine Bewegungsrichtung - zumindest relativ zu einer Vorzugsachse des mobilen Datengerätes - erfassen können. Dies kann zur Unterscheidung verschiedener Informationsdisplays in dem Fahrzeug herangezogen werden. Ohne diese Entscheidung kann bei Feststellen einer entsprechend gerichteten Bewegung die lediglich Drahtloskommunikation als solche initiiert werden.

Vorzugsweise ist die Recheneinheit des mobilen Datengerätes dazu eingerichtet, die Richtung, Geschwindigkeit, Beschleunigung und/oder Bewegung auf dem Touch-Display und/oder des mobilen Datengeräts insgesamt zu erfassen und die Drahtloskommunikation zur Übertragung der Videosignale bei Überschreiten von Schwellwerten und/oder einer Kombination verschiedener Schwellwerte für die Richtung, Beschleunigung und/oder Dauer der Bewegung einzuleiten. Durch das Festlegen von Schwellwerten und/oder die Kombination verschiedener einzelner Schwellwerte lässt sich die gerichtete Bewegung eines Fingers auf dem Touch-Display oder des gesamten mobilen Gerätes zuverlässig von zufälligen Bewegungen, beispielsweise durch Vibrationen im Fahrzeug, unterscheiden.

Erfindungsgemäß kann die Richtung zu einem bestimmten Informationsdisplay in der Recheneinheit des mobilen Datengerätes eingegeben sein. Dies kann durch eine Programmapplikation fest vorgegeben und beispielsweise bezogen auf den Sitzplatz des Fahrers erfolgen, wobei bestimmte Richtungsintervalle verschiedenen Informationsdisplays in dem Fahrzeug fest zugewiesen sind. Eine weitere Möglichkeit der Richtungszuweisung besteht darin, dass die Recheneinheit des mobilen Datengeräts dazu eingerichtet ist, einen Anschluss an ein drahtloses Kommunikationssystem des Kraftfahrzeugs zu erkennen und auf dem Display, beispielsweise einem Touch-Display, des mobilen Datengeräts einen Rahmen darzustellen, in dem die Anzeige des Bildinhalts des mobilen Datengeräts erfolgt und auf dem für eine Drahtloskommunikation der Videosignale zur Verfügung stehende Informationsdisplays angezeigt werden. Dann kann erfindungsgemäß bei einer Bewegung des mobilen Datengeräts in die Richtung des dem jeweiligen Informationsdisplay zugewiesenen Rahmenabschnitts beziehungsweise Bewegung des Fingers auf dem Touch-Display hin zu diesem Rahmenabschnitt die erfindungsgemäße Kommunikation zur Übertragung der Videosignale eingeleitet werden. Dies hat den Vorteil, dass die intuitive Bewegung durch zusätzliche Angaben auf dem Informationsdisplay unterstützt wird.

Erfindungsgemäß kann der Transfer von Daten auch bidirektional von dem mobilen Gerät zu dem Informationsdisplay sowie in umgekehrter Richtung stattfinden. In Fortführung dieses Gedankens kann die Recheneinheit eines oder mehrerer Informationsdisplays und/oder die Recheneinheit einer Kommunikationseinheit des Kraftfahrzeugs, beispielsweise einer Multimediaeinheit mit mehreren angeschlossenen Informationsdisplays, dazu eingerichtet sein, bei der Anmeldung eines mobilen Datengeräts an das drahtlose Kommunikationssystem des Fahrzeugs über die drahtlose Kommunikation ein selbstausführendes Applikationsprogramm an die Recheneinheit des mobilen Datengeräts zu übertragen, welches als Applikationsprogramm zur Einrichtung der Recheneinheit des mobilen Datengerätes programmiert ist, um das vorbeschriebene Verfahren auszuführen. Im Rahmen dieses Applikationsprogramms können dem mobilen Datengerät insbesondere die zur Verfügung stehenden Informationsdisplays des Fahrzeugs mitgeteilt werden, die Berührungsschnittstelle des mobilen Datengerätes initialisiert werden und/oder der vorbeschriebene Rahmen auf dem Display des mobilen Datengerätes dargestellt werden.

Um die Richtungserkennung weiter zu verbessern, kann erfindungsgemäß vorgesehen sein, dass innerhalb des Fahrzeugs die Position des mobilen Datengeräts erfasst werden soll. Dies kann dadurch geschehen, dass die Recheneinheit einer Kommunikationseinheit des Fahrzeugs, welche einen Sender und Empfänger des drahtlosen Kommunikationssystems steuert, dazu eingerichtet ist, aus der Empfangsfeldstärke der von dem mobilen Datengerät empfangenen Signale die Position des mobilen Datengeräts in dem Kraftfahrzeug zu ermitteln. Bei einer Bewegung des Mobiltelefons können zusätzlich der Anfangs- und Endpunkt der Bewegung erfasst werden, so dass eine Ermittlung der Richtung der Bewegung im Hinblick auf eine in dem Kraftfahrzeug bekannte Anordnung der Informationsdisplays möglich ist.

Ergänzend kann über die erfindungsgemäße Schnittstelle ein Austausch von Daten stattfinden, indem zusätzlich zu den Videosignalen auch Datensignale übertragen werden. Insbesondere kann dazu vorgesehen sein, dass durch die Schnittstelle bei einer eingerichteten Drahtloskommunikation zur Darstellung der Videosignale auch Möglichkeiten zur Datenübertragung, insbesondere von Dateien, mit angeboten werden. Hierzu könnte durch die Schnittstelle auf dem Informationsdisplay eine entsprechende Befehlsstruktur angezeigt werden, die auf dem Informationsdisplay durch den Nutzer aufrufbar ist. Damit ist es nicht unbedingt notwendig, eine wirkliche Netzwerkstruktur zwischen der Recheneinheit des mobilen Datengeräts und der Recheneinheit des Informationsdisplays herzustellen, da die entsprechende Datenübertragungsfunktionalität in die erfindungsgemäße Schnittstelle mit integriert ist. Alternativ ist natürlich eine konventionelle Netzwerkverbindung zur Übertragung beliebiger Daten denkbar, die jedoch im Gegensatz zu der vorbeschriebenen Lösung eine genauere Kenntnis der verschiedenen, miteinander zu verbindenden System erfordert.

Die Erfindung betrifft ferner ein Computerprogrammprodukt mit Programmcodemitteln gemäß dem Anspruch 10.

Dazu wird vorzugsweise die Recheneinheit des mobilen Datengeräts als Master und die Recheneinheit des angesprochenen Informationsdisplays als Slave eingerichtet.

Gemäß einer besonders bevorzugten Ausführungsform ist der Programmteil zur Einrichtung der Recheneinheit des mobilen Datengeräts als selbstausführende Applikationssoftware ausgeführt, welche über das drahtlose Kommunikationssystem des Kraftfahrzeugs an die Recheneinheit des mobilen Datengeräts übertragen wird, beispielsweise bei Anmeldung des Datengeräts an dem drahtlosen Kommunikationssystem des Kraftfahrzeugs.

Durch die vorliegende Erfindung ist ein nahtloser Übergang zwischen mobilen Datengeräten und Informationssystemen des Kraftfahrzeugs möglich, wobei die Bedienung des Gesamtsystems leicht erlernbar und intuitiv ist. Hierdurch wird die Akzeptanz bei dem Anwender erhöht, so dass dieser die Darstellung eines Displays seines mobilen Datengeräts auf dem Kraftfahrzeug gerne anwenden wird und beispielsweise auch nutzen kann, um Internetinhalte auf dem Bildschirm des Kraftfahrzeugs in übersichtlicher Weise anzuzeigen, auch wenn das Kraftfahrzeug selbst mit dem angeschlossenen Rechensystem keinen Zugang zu dem Internet aufweist.

Weitere Merkmale, Vorteile und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:
- Fig. 1: schematisch die erfindungsgemäße Schnittstelle zur Übertragung von Videosignalen von einem mobilen Datengerät auf ein Informationsdisplay gemäß einer ersten Ausführungsform;
- Fig. 2: schematisch eine erfindungsgemäße Schnittstelle zur Übertragung Videosignalen von einem mobilen Datengerät auf ein Informationsdisplay gemäß einer zweiten Ausführungsform und
- Fig. 3: schematisch das Display eines mobilen Datengeräts mit der implementierten erfindungsgemäßen Schnittstelle.

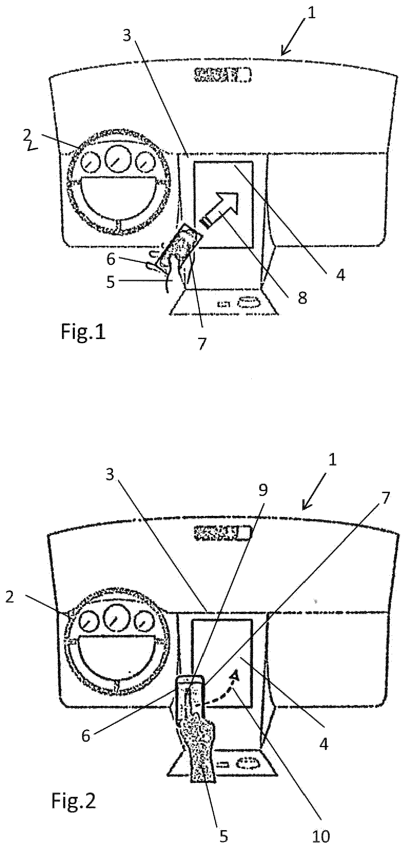

Fig. 1 stellt schematisch das Cockpit 1 mit einem Lenkrad 2 am Fahrersitz und einer Mittelkonsole 3 dar, in welcher ein zentrales Informationsdisplay 4 des Fahrzeugs angeordnet ist. Der Fahrer des Kraftfahrzeugs, von dem lediglich eine Hand 5 schematisch dargestellt ist, hält ein als Smartphone ausgebildetes mobiles Datengerät 6 mit einem Display 7.

Zwischen dem mobilen Datengerät 6 und dem Informationsdisplay 4 findet eine Drahtloskommunikation statt, über welche der Bildschirminhalt (d. h. das Videosignal) des Displays 7 des mobilen Datengerätes 6 auf dem Informationsdisplay 4 dargestellt wird. Dazu ist eine nicht dargestellte Recheneinheit des mobilen Datengerätes 6 dazu eingerichtet, mittels der Drahtloskommunikation das Informationsdisplay 4 des Kraftfahrzeugs durch Videosignale anzusteuern. Entsprechend ist die Recheneinheit des Informationsdisplays 4 dazu eingerichtet, die von dem mobilen Datengerät 6 empfangenen Videosignale darzustellen. Die Drahtloskommunikation zwischen dem mobilen Datengerät 6 und dem Informationsdisplay 4 ist als uni- oder bidirektionale Master-Slave-Kommunikation aufgebaut, so dass das mobile Datengerät 6 unmittelbar das Informationsdisplay ansteuert.

Um die Drahtloskommunikation zur Übertragung der Videosignale einzuleiten, weist das mobile Datengerät 6 eine Berührungsschnittstelle auf. In dem in Fig. 1 dargestellten Beispiel ist die Berührungsschnittstelle in der Recheneinheit des mobilen Datengerätes 6 dadurch implementiert, dass die Drahtloskommunikation bei einer gerichteten Bewegung des gesamten mobilen Datengerätes 6 in Richtung des Informationsdisplays 4 des Fahrzeugs eingeleitet wird. Diese vorzugsweise als möglichst gleichförmige Bewegung mit abruptem Anfang und Ende auszubildende Bewegung wird durch nicht dargestellte Beschleunigungssensoren in dem mobilen Datengerät 6 erfasst. Dieses abrupte Verschieben des mobilen Datengerätes 6 ist durch den Pfeil 8 symbolisiert.

Sobald ein Beschleunigungssensor in dem mobilen Datengerät 6 eine derartige Bewegung 8 detektiert, während sich das Datengerät 6 in dem Kraftfahrzeug befindet, wird der Bildschirminhalt des Displays 7 des mobilen Datengeräts 6 über eine Drahtloskommunikation als Videosignal an das Informationsdisplay 4 übertragen, dessen Recheneinheit zur Darstellung dieses in dem Videosignal übertragenen Bildschirminhalts auf dem Informationsdisplay 4 eingerichtet ist.

In Fig. 2 ist dasselbe Cockpit 1 dargestellt wie in Fig. 1, auf dessen genaue Beschreibung daher verzichtet werden kann. Das als auch Smartphone ausgebildete mobile Datengerät 6 befindet sich in einem nicht sichtbaren Halter an der Mittelkonsole 3 des Fahrzeugs. Die Hand des Fahrers 4 bedient mit dem Finger 9 das als Touch-Display ausgebildete Display 7 des mobilen Datengerätes 6, wobei eine Bewegung 10 des Fingers von der Mitte des Displays 7 hin zum Rand des Displays 7 des mobilen Datengerätes 6 in Richtung des Informationsdisplays 4 erfolgt. Auch diese Bewegung 10 ist vorzugsweise als möglichst gleichförmige Bewegung aus der Mitte des Touch-Displays bis hin zum Rand auszuführen, wobei die Bewegung in der Mitte abrupt startet und in einer gleichförmigen Bewegung bis zum Rand des Displays erfolgt, so dass die sensitive Fläche des Displays 7 abrupt verlassen wird.

Hierdurch wird die erfindungsgemäße Schnittstelle gestartet, welche die Datenübertragung des Videosignals von dem mobilen Datengerät 6 auf das Informationsdisplay 4 ermöglicht, so dass der Bildschirminhalt des Displays 7 des mobilen Datengerätes 6 nachfolgend auf dem Informationsdisplay 4 dargestellt wird.

Die beiden in Fig. 1 und 2 dargestellten Berührungsschnittstellen des mobilen Datengerätes 6 können erfindungsgemäß gleichzeitig in dem mobilen Datengerät 6 realisiert sein, so dass der Benutzer intuitiv zwischen den beiden Gesten zur Einleitung der Drahtloskommunikation zur Übertragung des Videosignals (d. h. des Bildschirminhalts) Gebrauch machen kann.

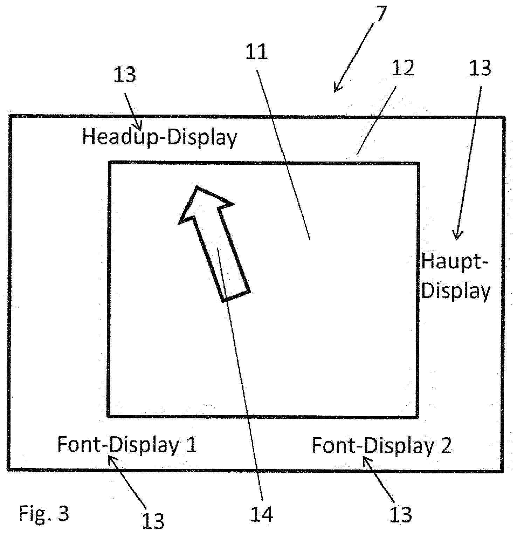

Fig. 3 zeigt das Display 7 des mobilen Datengerätes 6 nach Einrichtung der Berührungsschnittstelle gemäß einer weiteren Ausführungsform, welche mit den vorbeschriebenen Ausführungsformen kombinierbar ist, schematisch im Detail. Erfindungsgemäß kann die Berührungsschnittstelle des mobilen Datengerätes 6 beispielsweise automatisch gestartet werden, sobald das mobile Datengerät 6 in das Kraftfahrzeug mitgenommen und an das drahtlose Kommunikationssystem des Fahrzeugs angeschlossen wird.

Durch das Starten der Berührungsschnittstelle wird die Anzeigefläche 11 für den eigentlichen Bildschirminhalt des Displays 7 des mobilen Datengerätes 6 verkleinert und von einem Rahmen 12 umgeben, auf welchem Displayanzeigen 13 dargestellt werden. Diese Displayanzeigen 13 geben die in dem Fahrzeug zur Verfügung stehenden Informationsdisplays 4 an, auf denen der Bildschirminhalt des Displays 7 des mobilen Datengerätes 6 darstellbar ist. Durch eine gerichtete Bewegung in Richtung der jeweiligen Displayanzeigen, sei es durch Bewegen des Fingers 9 von der Mitte der Anzeigefläche 11 in Richtung der Displayanzeige 13 oder Bewegung des gesamten mobilen Datengerätes in diese Richtung, ausgehend von dem gedachten Mittelpunkt der Anzeigefläche 11, wird die erfindungsgemäße Drahtloskommunikation zur Übertragung der Videosignale eingeleitet. Diese Bewegung ist durch den Pfeil 14 dargestellt.

Die beschriebenen Ausführungsbeispiele stellen lediglich beispielhafte Realisierungen der erfindungsgemäßen Schnittstelle dar, um Videosignale von dem Display 7 eines mobilen Datengerätes 6 an ein Informationsdisplay 4 eines Fahrzeugs zu übertragen. Die Erfindung ist nicht auf diese konkreten Ausführungsformen beschränkt.

## Patentansprüche

1. Schnittstelle zur Datenübertragung in einem Kraftfahrzeug zwischen einem mobilen Datengerät (6) mit einer Recheneinheit und einem Informationsdisplay (4) in dem Kraftfahrzeug, wobei das mobile Datengerät (6) und das zentrale Informationsdisplay (4) über eine Drahtloskommunikation miteinander verbindbar sind und der Bildschirminhalt des mobilen Datengeräts (6) auf dem Informationsdisplay (4) darstellbar ist, dass die Recheneinheit des mobilen Datengeräts (6) dazu eingerichtet ist, mittels der Drahtloskommunikation das Informationsdisplay (4) in dem Kraftfahrzeug durch Videosignale anzusteuern, und dass die Recheneinheit des Informationsdisplays (4) dazu eingerichtet ist, die von dem mobilen Datengerät (6) empfangenen Videosignale darzustellen, **dadurch gekennzeichnet, dass** die Recheneinheit eines oder mehrerer Informationsdisplays (4) und/oder die Recheneinheit einer Kommunikationseinheit des Kraftfahrzeugs dazu eingerichtet ist, bei Anmeldung eines mobilen Datengeräts (6) an das drahtlose Kommunikationssystem des Kraftfahrzeugs über die Drahtloskommunikation ein selbstausführendes Applikationsprogramm an die Recheneinheit des mobilen Datengeräts (6) zu übertragen, welches zur Einrichtung der Recheneinheit des mobilen Datengeräts (6) programmiert ist.

2. Schnittstelle nach Anspruch 1, **dadurch gekennzeichnet, dass** die Recheneinheit des mobilen Datengeräts (6) dazu eingerichtet ist, die Drahtloskommunikation zur Übertragung der Videosignale mittels einer Berührungsschnittstelle des mobilen Datengeräts (6) einzuleiten.

3. Schnittstelle nach Anspruch 2, **dadurch gekennzeichnet, dass** die Darstellung der Videosignale bei Einleitung der Drahtloskommunikation zur Übertragung der Videosignale auf einem vorausgewählten Informationsdisplay (4) des Fahrzeugs erfolgt.

4. Schnittstelle nach Anspruch 2, **dadurch gekennzeichnet, dass** die Recheneinheit des mobilen Datengeräts (6) dazu eingerichtet ist, die Drahtloskommunikation bei einer gerichteten Bewegung auf einem Touchdisplay (7) des mobilen Datengeräts in Richtung des Informationsdisplays (4) des Fahrzeugs einzuleiten.

5. Schnittstelle nach Anspruch 2 bis 4, **dadurch gekennzeichnet, dass** die Recheneinheit des mobilen Datengeräts (6) dazu eingerichtet ist, die Drahtloskommunikation bei einer gerichteten Bewegung des gesamten mobilen Datengeräts (6), welche über in dem mobilen Datengerät (6) angeordnete Beschleunigungssensoren feststellbar ist, in Richtung des Informationsdisplays (4) des Fahrzeugs einzuleiten.

6. Schnittstelle nach einem der Ansprüche 2 bis 5, **dadurch gekennzeichnet, dass** die Recheneinheit des mobilen Datengeräts (6) dazu eingerichtet ist, die Richtung, Geschwindigkeit, Beschleunigung und/oder Dauer der Bewegung zu erfassen und die Drahtloskommunikation zur Übertragung der Videosignale bei Überschreiten von Schwellwerten und/oder einer Kombination verschiedener Werte für die Richtung, Beschleunigung und/oder Dauer der Bewegung einzuleiten.

7. Schnittstelle nach einem der vorhergehenden Ansprüche, **dadurch gekennzeichnet, dass** die Recheneinheit des mobilen Datengeräts (6) dazu eingerichtet ist, einen Anschluss an ein drahtloses Kommunikationssystem eines Kraftfahrzeugs zu erkennen und auf dem Display einen Rahmen (12) darzustellen, in dem die Anzeige (11) des Bildinhalts des mobilen Datengeräts (6) erfolgt und auf dem für eine Drahtloskommunikation der Videosignale zur Verfügung stehende Informationsdisplays (13) angezeigt werden.

8. Schnittstelle nach einem der vorhergehenden Ansprüche, **dadurch gekennzeichnet, dass** die Recheneinheit einer Kommunikationseinheit des Kraftfahrzeugs, welche einen Sender und Empfänger des Drahtloskommunikationssystems steuert, dazu eingerichtet ist, aus der Empfangsfeldstärke der von dem mobilen Datengerät (6) empfangenen Signale die Position des mobilen Datengeräts (6) in dem Kraftfahrzeug zu ermitteln.

9. Schnittstelle nach einem der vorhergehenden Ansprüche, **dadurch gekennzeichnet, dass** zusätzlich zu den Videosignalen Datensignale übertragen werden.

10. Computerprogrammprodukt mit Programmmitteln zur Einrichtung einer Recheneinheit eines mobilen Datengeräts (6) zur Ansteuerung eines Informationsdisplays (4) in einem Kraftfahrzeug durch Videosignale mittels einer Drahtloskommunikation eines drahtlosen Kommunikationssystems des Kraftfahrzeugs gemäß einer Schnittstelle nach den Ansprüchen 1 bis 10 und zur Einrichtung der Recheneinheit des Informationsdisplays (4) zum Darstellen der von dem mobilen Datengerät (6) empfangenen Videosignale gemäß einer Schnittstelle nach den Ansprüchen 1 bis 9, **dadurch gekennzeichnet, dass** der Programmteil zur Einrichtung der Recheneinheit des mobilen Datengeräts (6) als selbstausführende Applikationssoftware ausgeführt ist und über das drahtlose Kommunikationssystem des Kraftfahrzeugs an die Recheneinheit des mobilen Datengeräts (6) übertragen wird.

11. Computerprogrammprodukt nach Anspruch 10, **dadurch gekennzeichnet, dass** die Recheneinheit des mobilen Datengeräts (6) als Master und die Recheneinheit des Informationsdisplays (4) als Slave eingerichtet werden.

## Claims

1. Interface for data transmission in a motor vehicle between a mobile data appliance (6) having a computation unit and an information display (4) in the motor vehicle, wherein the mobile data appliance (6) and the central information display (4) can be connected to one another by means of wireless communication and the screen content of the mobile data appliance (6) can be presented on the information display (4), the computation unit of the mobile data appliance (6) is set up to use the wireless communication to actuate the information display (4) in the motor vehicle by means of video signals, and the computation unit of the information display (4) is set up to present the video signals received from the mobile data appliance (6), **characterized in that** the computation unit of one or more information displays (4) and/or the computation unit of a communication unit of the motor vehicle is/are set up to use the wireless communication to transmit a self-executing application program to the computation unit of the mobile data appliance (6), which program is programmed to set up the computation unit of the mobile data appliance (6), when a mobile data appliance (6) registers on the wireless communication system of the motor vehicle.

2. Interface according to Claim 1, **characterized in that** the computation unit of the mobile data appliance (6) is set up to initiate the wireless communication for transmitting the video signals by means of a touch interface of the mobile data appliance (6).

3. Interface according to Claim 2, **characterized in that** the video signals are presented on a preselected information display (4) of the vehicle when the wireless communication for transmitting the video signals is initiated.

4. Interface according to Claim 2, **characterized in that** the computation unit of the mobile data appliance (6) is set up to initiate the wireless communication in the event of a directional movement on a touch display (7) of the mobile data appliance in the direction of the information display (4) of the vehicle.

5. Interface according to Claims 2 to 4, **characterized in that** the computation unit of the mobile data appliance (6) is set up to initiate the wireless communication in the event of a directional movement of the entire mobile data appliance (6), which can be established by means of acceleration sensors arranged in the mobile data appliance (6), in the direction of the information display (4) of the vehicle.

6. Interface according to one of Claims 2 to 5, **characterized in that** the computation unit of the mobile data appliance (6) is set up to capture the direction, speed, acceleration and/or duration of the movement and to initiate the wireless communication for transmitting the video signals when threshold values and/or a combination of various values for the direction, acceleration and/or duration of the movement is/are exceeded.

7. Interface according to one of the preceding claims, **characterized in that** the computation unit of the mobile data appliance (6) is set up to recognize connection to a wireless communication system of a motor vehicle and to present on the display a frame (12) in which the image content of the mobile data appliance (6) is displayed (11) and on which information displays (13) that are available for wireless communication of the video signals are displayed.

8. Interface according to one of the preceding claims, **characterized in that** the computation unit of a communication unit in the motor vehicle, which communication unit controls a transmitter and a receiver in the wireless communication system, is set up to ascertain the position of the mobile data appliance (6) in the motor vehicle from the reception field strength of the signals received from the mobile data appliance (6) .

9. Interface according to one of the preceding claims, **characterized in that** data signals are transmitted in addition to the video signals.

10. Computer program product having program means for setting up a computation unit of a mobile data appliance (6) to actuate an information display (4) in a motor vehicle by means of video signals by using wireless communication by a wireless communication system of the motor vehicle on the basis of an interface according to Claims 1 to 10 and for setting up the computation unit of the information display (4) to present the video signals received from the mobile data appliance (6) on the basis of an interface according to Claims 1 to 9, **characterized in that** the program portion is designed to set up the computation unit of the mobile data appliance (6) as a piece of self-executing application software and is transmitted to the computation unit of the mobile data appliance (6) via the wireless communication system of the motor vehicle.

11. Computer program product according to Claim 10, **characterized in that** the computation unit of the mobile data appliance (6) is set up as a master and the computation unit of the information display (4) is set up as a slave.

## Revendications

1. Interface pour le transfert de données dans un véhicule automobile entre un périphérique de données mobile (6) doté d'une unité de calcul et un écran d'information (4) dans le véhicule automobile, dans laquelle le périphérique de données mobile (6) et l'écran d'information (4) central peuvent être reliés l'un à l'autre par une communication sans fil et le contenu de l'écran du périphérique de données mobile (6) peut être visualisé sur l'écran d'information (4), l'unité de calcul du périphérique de données mobile (6) est conçue pour commander l'écran d'information (4) dans le véhicule automobile au moyen de la communication sans fil par l'intermédiaire de signaux vidéo, et l'unité de calcul de l'écran d'information (4) est conçue pour visualiser les signaux vidéo reçus par le périphérique de données mobile (6),
**caractérisée en ce que** l'unité de calcul d'un ou de plusieurs écrans d'information (4) et/ou l'unité de calcul d'une unité de communication du véhicule automobile est conçue pour transmettre un programme d'application auto-exécuté à l'unité de calcul du périphérique de données mobile (6) lors de l'enregistrement d'un périphérique de données mobile (6) sur le système de communication sans fil du véhicule automobile par l'intermédiaire de la communication sans fil, lequel programme d'application est programmé pour configurer l'unité de calcul du périphérique de données mobile (6).

2. Interface selon la revendication 1, **caractérisée en ce que** l'unité de calcul du périphérique de données mobile (6) est conçue pour déclencher la communication sans fil afin de transférer les signaux vidéo au moyen d'une interface tactile du périphérique de données mobile (6).

3. Interface selon la revendication 2, **caractérisée en ce que** la visualisation des signaux vidéo s'effectue sur un écran d'information (4) présélectionné du véhicule lors du déclenchement de la communication sans fil destinée au transfert des signaux vidéo.

4. Interface selon la revendication 2, **caractérisée en ce que** l'unité de calcul du périphérique de données mobile (6) est conçue pour déclencher la communication sans fil lors d'un mouvement dirigé sur un écran tactile (7) du périphérique de données mobile dans la direction de l'écran d'information (4) du véhicule.

5. Interface selon les revendications 2 à 4, **caractérisée en ce que** l'unité de calcul du périphérique de données mobile (6) est conçue pour déclencher la communication sans fil lors d'un mouvement dirigé de l'ensemble du périphérique de données mobile (6), qui peut être détecté par des capteurs d'accélération disposés dans le périphérique de données mobile (6), dans la direction de l'écran d'information (4) du véhicule.

6. Interface selon l'une des revendications 2 à 5, **caractérisée en ce que** l'unité de calcul du périphérique de données mobile (6) est conçue pour détecter la direction, la vitesse, l'accélération et/ou la durée du mouvement et pour déclencher la communication sans fil destinée au transfert des signaux vidéo lorsque des valeurs de seuil et/ou une combinaison de différentes valeurs de la direction, de l'accélération et/ou de la durée du mouvement sont dépassées.

7. Interface selon l'une des revendications précédentes, **caractérisée en ce que** l'unité de calcul du périphérique de données mobile (6) est conçue pour reconnaître une connexion à un système de communication sans fil d'un véhicule automobile et pour visualiser sur l'écran un cadre (12) dans lequel est effectué l'affichage du contenu d'image du périphérique de données mobile (6) et sur lequel sont affichés des écrans d'information (11) disponibles pour une communication sans fil des signaux vidéo (13).

8. Interface selon l'une des revendications précédentes, **caractérisée en ce que** l'unité de calcul d'une unité de communication du véhicule automobile, qui commande un émetteur et un récepteur du système de communication sans fil, est conçue pour déterminer à partir de l'intensité du champ reçu des signaux reçus par le périphérique de données mobile (6), la position du périphérique de données mobile (6) dans le véhicule automobile.

9. Interface selon l'une des revendications précédentes, **caractérisée en ce que** des signaux de données sont transférés en plus des signaux vidéo.

10. Produit de programme informatique comportant des moyens à programmes destinés à configurer une unité de calcul d'un périphérique de données mobile (6) afin de commander un écran d'information (4) dans un véhicule automobile par l'intermédiaire de signaux vidéo au moyen d'une communication sans fil d'un système de communication sans fil du véhicule automobile conformément à une interface selon les revendications 1 à 10 et à configurer l'unité de calcul de l'écran d'information (4) afin de visualiser les signaux vidéo reçus par le périphérique de données mobile (6) conformément à une interface selon les revendications 1 à 9,
**caractérisé en ce que** la partie de programme destinée à configurer l'unité de calcul du périphérique de données mobile (6) est conçue en tant que logiciel d'application auto-exécuté et est transférée par l'intermédiaire du système de communication sans fil du véhicule automobile à l'unité de calcul du périphérique de données mobile (6).

11. Produit de programme informatique selon la revendication 10, **caractérisé en ce que** l'unité de calcul du périphérique de données mobile (6) est configurée en tant que maître et **en ce que** l'unité de calcul de l'écran d'information (4) est configurée en tant qu'esclave.
